Europäisches Patentamt

European Patent Office

Office européen des brevets

(11) Numéro de publication : **0 549 456 A1**

## (12) DEMANDE DE BREVET EUROPEEN

(21) Numéro de dépôt : **92403513.2**

(22) Date de dépôt : **22.12.92**

(51) Int. Cl.$^5$ : **G01B 9/02**

(30) Priorité : **27.12.91 FR 9116260**

(43) Date de publication de la demande :
**30.06.93 Bulletin 93/26**

(84) Etats contractants désignés :
**DE GB**

(71) Demandeur : **FRANCE TELECOM**
**6, Place d'Alleray**
**F-75015 Paris (FR)**

(72) Inventeur : **Vareille, Aimé**
**3, rue Gabriel Didier**
**F-38130 Echirolles (FR)**
Inventeur : **Schiltz, André**
**85, allée Chamrousse**
**F-38330 Saint-Ismier (FR)**
Inventeur : **Hauüy, Jean-Claude**
**rue Gaston Angelier, Cidex 251B**
**F-38190 Crolles (FR)**

(74) Mandataire : **Casalonga, Axel et al**
**BUREAU D.A. CASALONGA - JOSSE**
**Morassistrasse 8**
**W-8000 München 5 (DE)**

(54) **Procédé et dispositif optiques de mesure de distance et leur application au positionnement relatif de pièces.**

(57) Procédé et dispositif optiques de mesure de distance, consistant à émettre un faisceau lumineux incident (13) comprenant au moins deux ondes de longueurs d'ondes différentes ($\lambda1$ et $\lambda2$) ; à séparer ce faisceau en un faisceau de référence (15) et un faisceau de mesure (17) qui se réfléchissent sur respectivement un réflecteur de référence (16) et une zone (18) d'une pièce (19) dont on veut mesurer la position dans la direction du faisceau de mesure et se recombinent en un faisceau résultant (20) dans lequel lesdites ondes présentent des états de polarisation dont les composantes tournent lorsque le chemin optique du faisceau précité de mesure varie et qui déterminent dans la direction du faisceau de mesure des plages adjacentes aux extrémités de chacune desquelles les positions angulaires de deux composantes correspondantes de ces états de polarisation sont identiques ; à déterminer dans le faisceau résultant (20) les positions angulaires ($\alpha1$ et $\alpha2$) de deux composantes correspondantes desdits états de polarisation desdites ondes ; et à calculer en fonction desdites positions angulaires, la distance séparant la zone précitée de ladite pièce par rapport à une position de référence, de préférence l'image du réflecteur de référence.

Leur application au positionnement de pièces, notamment d'une puce insérée dans un substrat.

FIG. 3

EP 0 549 456 A1

*La présente invention* concerne un procédé et un dispositif optique de mesure de distance et leur application au positionnement de pièces.

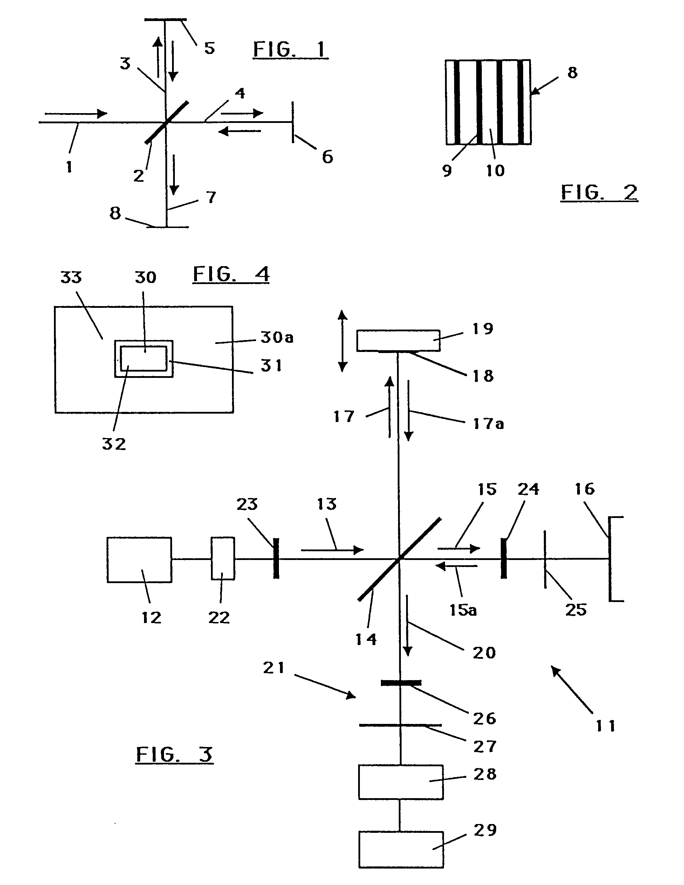

Pour mesurer des distances et plus précisément des variations de distance, on utilise depuis longtemps des interféromètres, par exemple du type MICHELSON, représenté en figure 1 du dessin annexé, dans lesquels un faisceau incident monochromatique 1 est séparé par une lame séparatrice 2 en un faisceau de référence 3 et un faisceau de mesure 4 qui sont renvoyés vers cette lame séparatrice 2 par des réflecteurs, formés par exemple par des miroirs 5 et 6, pour être recombinés en un faisceau résultant 7.

Si les chemins optiques parcourus par le faisceau de référence 3 et le faisceau de mesure 4 sont distincts, les ondes électromagnétiques de ces derniers sont déphasées et on peut observer sur un plan d'observation 8 placé sur le faisceau résultant 7 des franges d'interférence 9 et 10 alternativement claires et sombres comme l'illustre la figure 2 du dessin annexé. Si l'on déplace l'un des miroirs, par exemple le miroir 5, et si l'on place une fente dans le plan 8, on verra défiler des franges sombres et lumineuses au travers de cette fente, le passage de deux franges sombres correspondant à un déplacement du miroir 5 d'une demi-longueur d'onde.

Ainsi, en comptant les franges, on peut déterminer le déplacement du miroir 5, des interpolations pouvant être effectuées entre deux franges.

Dans les appareils commercialisés qui mettent en oeuvre le principe ci-dessus des interféromètres, la précision est de l'ordre du 48ème de la longueur d'onde de l'onde incidente utilisée. Ainsi, si la source lumineuse émet un faisceau incident dans le rouge, de 600 nm, la précision susceptible d'être obtenue avec un appareil de qualité est de l'ordre de 0,3 nm.

Pour augmenter la précision des interféromètres, il a été proposé de modifier la polarisation mutuelle du faisceau de référence et du faisceau de mesure pour que leurs ondes soient polarisées orthogonalement l'une à l'autre lors de leur recombinaison. Le faisceau résultant ne fournit plus alors une figure d'interférence mais est constitué d'une onde de polarisation dépendant du déphasage entre le faisceau de référence et le faisceau de mesure. On peut alors procéder à l'analyse de ce déphasage dû à une différence de chemins optiques entre le faisceau de référence et le faisceau de mesure, par une analyse de polarisation, à l'aide d'appareils connus dans le domaine de la polarimétrie, par exemple des ellipsomètres à lame tournante ou autres analyseurs de polarisation. Ces appareils de mesure pouvant atteindre une précision de l'ordre du centième de degré, la précision susceptible d'être atteinte par mesure de déphasage peut être de l'ordre du centième de nanomètre.

Cette technique de mesure, bien que permettant de mesurer des déplacements de l'un des miroirs avec précision, laisse subsister une indétermination en ce qui concerne la position de ce miroir compte tenu de l'incertitude inhérente à la mesure d'un angle qui se fait modulo $2\pi$. Pour un même résultat de la mesure d'angle de déphasage, le miroir peut en effet être à une distance $\underline{d}$ mais aussi à une distance d, (+) ou (-) k $\lambda/2$, $\lambda$ étant la longueur d'onde utilisée et k étant un entier naturel.

La présente invention vise à proposer une autre technique de mesure de distance et les applications qui en découlent.

La présente invention a tout d'abord pour objet un procédé optique de mesure de distance, qui consiste à émettre un faisceau lumineux incident comprenant au moins deux ondes de longueurs d'ondes différentes ($\lambda 1$ et $\lambda 2$) ; à séparer ce faisceau en un faisceau de référence et un faisceau de mesure qui se réfléchissent sur respectivement un réflecteur de référence et une zone d'une pièce dont on veut mesurer la position dans la direction du faisceau de mesure ; à recombiner les faisceaux de référence et de mesure réfléchis en un faisceau résultant dans lequel lesdites ondes présentent des états de polarisation dont les composantes tournent lorsque le chemin optique du faisceau précité de mesure varie et qui déterminent dans la direction du faisceau de mesure des plages adjacentes aux extrémités de chacune desquelles les positions angulaires de deux composantes correspondantes de ces états de polarisation sont identiques ; à déterminer dans le faisceau résultant les positions angulaires ($\alpha 1$ et $\alpha 2$) de deux composantes correspondantes desdits états de polarisation desdites ondes ; et à calculer en fonction desdites positions angulaires, la distance séparant la zone précitée de ladite pièce par rapport à une position de référence.

Selon l'invention, le procédé consiste de préférence à calculer la distance $\underline{d}$ précitée par rapport à l'image du réflecteur de référence, en appliquant le principe des excédents fractionnaires aux entiers k1 et k2 des égalités de chemins optiques par la formule suivante

$$\alpha 1.\lambda 1 + 2.k1.\pi.\lambda 1 = \alpha 2.\lambda 2 + 2.k2.\pi.\lambda 2 = 4.\pi.n.d$$

dans laquelle n est l'indice de réfraction du milieu de mesure, ou la formule corrigée suivante

$$C1 + \alpha 1.\lambda 1 + 2.k1.\pi.\lambda 1 = C2 + \alpha 2.\lambda 2 + 2.k2.\pi.\lambda 2 = 4.\pi.n.d$$

dans laquelle C1 et C2 sont les différences de chemins optiques liées à la dispersion chromatique de l'interféromètre aux longueurs d'ondes choisies $\lambda 1$ et $\lambda 2$.

Dans une variante, le procédé consiste de préférence à émettre les deux ondes simultanément. Dans une variante, il consiste à émettre les deux ondes successivement.

Selon l'invention, le faisceau émis est de préférence un faisceau polychromatique, de préférence à spectre de raies étendu, duquel on extrait les deux ondes précitées.

Dans une variante de l'invention, on sélectionne les ondes précitées dans le faisceau incident. Dans une autre variante, on sélectionne les ondes précitées dans le faisceau résultant.

Selon l'invention, le procédé consiste de préférence à polariser le faisceau incident.

Selon l'invention, le procédé consiste de préférence à polariser orthogonalement entre eux, les faisceaux de référence et de mesure.

Selon l'invention, le procédé consiste à diviser le faisceau résultant en deux faisceaux d'analyse qui comprennent respectivement les ondes de longueurs d'onde λ1 et λ2.

Selon l'invention, les positions angulaires précitées des états de polarisation des ondes précitées peuvent avantageusement être analysées par un dispositif ellipsométrique.

Selon l'invention, les ondes du faisceau résultant sont de préférence transformées en ondes polarisés linéaires ou elliptiques très aplaties dont l'orientation varie en fonction du chemin optique du faisceau de mesure.

Selon l'invention, le procédé consiste à utiliser un réflecteur de référence présentant un coefficient de réflection identique ou voisin de celui de la zone précitée de la pièce.

Dans une variante, il peut consister à égaliser ou rapprocher en valeur l'intensité des faisceaux précités se recombinant.

Le procédé selon l'invention consiste de préférence à prérégler ladite pièce par analyse de franges en recherchant les franges les plus contrastées.

Le procédé selon l'invention peut avantageusement consister à placer la zone précitée de la pièce dans la plage centrée sur l'image du réflecteur de référence pour laquelle les chemins optiques du faisceau de référence et du faisceau de mesure sont égaux.

La présente invention a également pour objet un dispositif de mesure de distance d'une zone d'une pièce susceptible d'être utilisé pour la mise en oeuvre du procédé ci-dessus.

Ce dispositif comprend avantageusement des moyens pour émettre un faisceau de lumière comprenant deux ondes polarisées, une lame séparatrice placée de telle sorte que la polarisation du faisceau incident est parallèle ou perpendiculaire au plan d'incidence du faisceau sur cette lame, un réflecteur de référence placé sur le chemin du faisceau de référence, une lame quart d'onde placée dans le chemin du faisceau de référence ou de celui de mesure pour faire pivoter de 90° le plan de polarisation de ce faisceau, et des moyens pour analyser les positions angulaires des composantes correspondantes des états de polarisation desdites ondes dans le faisceau résultant.

les moyens d'analyse comprennent une lame quart d'onde placée dans le chemin du faisceau résultant pour transformer la polarisation de ce faisceau en une polarisation linéaire ou elliptique très aplatie, et un polariseur.

les moyens d'analyse peuvent avantageusement comprendre un dispositif ellipsométrique.

Le dispositif selon l'invention comprend de préférence des moyens pour égaliser ou rapprocher en valeur l'intensité des faisceaux précités se recombinant.

Le dispositif selon l'invention comprend de préférence des moyens d'analyse qui comprennent des moyens de photodétection desdites ondes et une unité d'analyse d'image et de calcul.

La présente invention a également pour objet un procédé de positionnement d'une pièce par rapport à une autre pièce qui lui est adjacente, susceptible de mettre en oeuvre le procédé ou le dispositif précités.

Ce procédé consiste avantageusement à mesurer la distance de trois zones ou points d'une première pièce par rapport au plan image du réflecteur de référence, à déplacer cette pièce ou le miroir jusqu'à une position de réglage par rapport à ce plan image, à mesurer la distance de trois zones ou points d'une seconde pièce par rapport au plan image du réflecteur de référence, à déplacer cette pièce jusqu'à une position de réglage par rapport à celle de la première pièce ou le miroir.

Le procédé ci-dessus consiste de préférence à placer les zones desdites pièces dans un même plan situé dans le plan image précité du réflecteur de référence.

Il peut en outre consister à déplacer le réflecteur de référence en vue des réglages relatifs en position desdites pièces.

*La présente invention* sera mieux comprise à l'étude de dispositifs optiques de mesure de distance et de leur fonctionnement, illustrés schématiquement sur les figures 3, 5 et 6 du dessin annexé, à titre d'exemples non limitatifs, la figure 4 montrant un exemple d'application particulière.

Le dispositif optique de mesure de distance représenté sur la figure 3 et repéré d'une manière générale par la référence 11 présente une structure correspondant à celle d'un interféromètre du type MICHELSON.

Il comprend en effet une source émettrice de lumière 12, de préférence un arc à vapeur de mercure ou laser, qui émet un faisceau incident 13 en direction d'une lame séparatrice 14. Cette lame séparatrice 14 divise ce faisceau incident 13 d'une part en un faisceau de référence 15 qui va en direction d'un miroir de référence 16 et d'autre part en un faisceau de mesure 17 qui va en direction d'une zone réfléchissante 18 d'une pièce 19 dont on veut connaître la position le long de ce faisceau 17. Le faisceau de référence 15 et le faisceau de mesure 17 sont respectivement réfléchis par le miroir 16 et la zone 18 de la pièce 19 en un faisceau réfléchi de référence 15a et un faisceau réfléchi de mesure 17a qui vont en direction de la lame séparatrice 15 et qui se recombinent pour former un faisceau résultant 20 qui va en direction d'un analyseur 21.

Sur le faisceau incident 13 est prévu un sélecteur d'ondes 22 pour sélectionner des longueurs d'ondes particulières dans le faisceau émis par la source 12, puis un polariseur 23 tel que l'onde de lumière monochromatique du faisceau incident 13 qui atteint la lame séparatrice 14 est polarisée parallèlement au plan d'incidence de cette lame 14. Le polariseur 23 pourrait cependant être tel que le faisceau incident 13 soit polarisé perpendiculairement à la lame séparatrice 14.

Sur le faisceau de référence 15 et son faisceau réfléchi 15a est disposée une lame quart d'onde 24 dont la ligne neutre est placée à 45° par rapport à la direction de polarisation du polariseur 23 placé sur le faisceau incident 13. Ainsi, lorsque le faisceau réfléchi de référence 15a atteint la lame séparatrice 14, il est polarisé orthogonalement au faisceau de mesure 17 ou au faisceau réfléchi de mesure 17a.

L'amplitude ou l'intensité des faisceaux réfléchis de référence 15a et de mesure 17a dépendant des coefficients de réflection du miroir de référence 16 et de la zone 18 de la pièce 19 qui peuvent être identiques ou voisins mais qui en général ne le sont pas, il est souhaitable de prévoir, sur les faisceaux de référence 15 et 15a, des filtres neutres commutables 25 rendant égales ou voisines ces intensités.

Les moyens d'analyse 21, constituant un ellipsomètre, qui sont disposés sur le faisceau résultant 20 comprennent une lame quart d'onde 26 dont les lignes neutres sont à 45° par rapport au plan incident et qui permet de transformer la polarisation de ce faisceau en une polarisation linéaire ou elliptique très aplatie, et un polariseur 27 qui permet de mesurer la position angulaire de la composante principale de l'état de polarisation du faisceau résultant 20 issu de la lame quart d'onde 26, relativement à une position de référence.

Les moyens d'analyse 21 comprennent également des moyens de photodétection 28, de préférence une caméra, associés au polariseur 27 et reliés à une unité d'analyse d'image et de calcul d'angle 29.

Ce polariseur 27 peut fonctionner par extinction ou par mesure de phase s'il est tournant et peut être remplacé par tout autre moyen de mesure angulaire connu en polarimétrie, en saccharimétrie ou autre. Les moyens d'analyse 21 peuvent avantageusement être un ellipsomètre.

A l'aide du sélecteur 22, qui pourrait être placé sur le faisceau résultant 20, on sélectionne une onde lumineuse d'une longueur d'onde λ particulière. On obtient sur le polariseur 27 un état de polarisation qui présente une polarisation linéaire ou elliptique très aplatie dont la composante principale se trouve, par rapport à une position angulaire de référence, dans une position angulaire déterminée.

Si l'on déplace la pièce 19 le long de la direction du faisceau de mesure 17, cette composante principale tourne, la variation angulaire de cette composante dépendant de la variation de position de la pièce 19, cette rotation étant de 180° pour un déplacement de λ/2.

Si maintenant on sélectionne à l'aide du sélecteur 22, simultanément ou successivement, deux ondes de longueurs d'onde différentes λ1 et λ2, on obtient alors par le polariseur 27 deux positions angulaires à valeurs d'angles α1 et α2 correspondant aux positions des composantes principales des états de polarisation de ces ondes dans le faisceau résultant 20.

Lorsque la pièce 19 se déplace le long du faisceau de mesure 17, ces angles α1 et α2 varient différemment. On peut alors diviser le déplacement de la pièce 19 le long de la direction du faisceau de mesure 17 en plages adjacentes aux extrémités de chacune desquelles les positions angulaires des deux composantes principales des états de polarisation des ondes de longueurs d'onde λ1 et λ2 sont identiques ou se superposent. Chacune des plages p présente une longueur qui se calcule en appliquant le principe des excédents fractionnaires dans la formule $E(\lambda 1).\lambda 2/2 = E(\lambda 2).\lambda 1/2 = \underline{p}$ dans laquelle $E(\lambda 1)$ et $E(\lambda 2)$ sont les entiers correspondant aux longueurs d'onde λ1 et λ2 présentant le même degré de précision sur ces longueurs d'onde.

Lorsque la zone 18 de la pièce 19 est placée dans une position telle que les chemins optiques du faisceau de référence 15 et du faisceau de mesure 17 sont égaux, cette position correspondant à ce que l'on va appeler l'image du miroir de référence 16, les composantes principales des états de polarisation sont, dans le polariseur 27, identiques ou superposés.

La zone 18 de la pièce 19 étant disposée dans l'une des plages situées de part et d'autre du plan image du miroir 16, on peut calculer sa distance d par rapport à ce plan en appliquant le principe des excédents fractionnaires aux entiers k1 et k2 des égalités de chemins optiques par la formule suivante

$$\alpha 1.\lambda 1 + 2.k1.\pi.\lambda 1 = \alpha 2.\lambda 2 + 2.k2.\pi.\lambda 2 = 4.\pi.n.d$$

dans laquelle n est l'indice de réfraction du milieu de mesure, ou la formule corrigée suivante

$$C1 + \alpha 1.\lambda 1 + 2.k1.\pi.\lambda 1 = C2 + \alpha 2.\lambda 2 + 2.k2.\pi.\lambda 2 = 4.\pi.n.d$$

dans laquelle C1 et C2 sont les différences de chemins optiques liées à la dispersion chromatique de l'interféromètre aux longeurs d'ondes choisies λ1 et λ2, α1 et α2 étant exprimés en radians.

Il est en effet souhaitable de procéder à l'analyse des états de polarisation des ondes de longueurs d'onde λ1 et λ2 quand la zone 18 de la pièce 19 est située dans la plage centrée sur le plan image du miroir 16 car c'est là que les états de polarisation sont les plus faciles à caractériser.

En pratique, pour placer la zone 18 de la pièce 19 dans cette plage, on peut procéder comme connu par analyse de franges, cette zone 18 de la pièce 19 étant dans cette plage lorsque les franges claires et sombres sont plus contrastées.

EXEMPLE

Pour amener la zone 18 de la pièce 19 dans les deux plages ci-dessus, on sélectionne à l'aide du sélecteur 22 une lumière de longueur de cohérence d'environ 100 µm et on procède par analyse de franges comme décrit ci-dessus. Une fois la zone de contraste maximum atteinte, on procède comme suit.

Pour mesurer la distance entre la position réelle de la zone 18 de la pièce 19 par rapport au plan image du miroir, correspondant à l'égalité des chemins optiques des faisceaux de référence 15 et de mesure 17, on sélectionne par exemple deux longueurs d'onde égales à 546,1 nm et 577 nm à l'aide du sélecteur 22 dans l'émission d'un arc de mercure.

Dans ce cas, $E(\lambda 1)$ est égal à 5461 et $E(\lambda 2)$ est égal à 5770 et la longueur $\underline{p}$ notamment de la plage centée centrée sur le plan image du miroir de référence est, en appliquant la formule précitée, égale à 546,1x5770/2 nm ou 5461x577/2 nm, soit 1575498.5 nm. La plage dans laquelle on peut calculer avec précision, en appliquant l'une des formules précitées, la position de la pièce par rapport à l'image du miroir s'étend de (+)787749.25 nm à (-)787749.25 nm.

Dans les formules précitées, on fait varier les coefficients k1 et k2 jusqu'à obtenir l'égalité $\alpha 1.\lambda 1 + 2.k1.\pi.\lambda 1 = \alpha 2.\lambda 2 + 2.k2.\pi.\lambda 2 = A = 4.\pi.n.d$, ou l'égalité $C1 + \alpha 1.\lambda 1 + 2.k1.\pi.\lambda 1 = C2 + \alpha 2.\lambda 2 + 2.k2.\pi.\lambda 2 = B = 4.\pi.n.d$.

Après quoi, ayant mesuré les angles $\alpha 1$ et $\alpha 2$, on calcule $\underline{d}$ par la formule $d = A/4.\pi.n$ ou la formule $d = B/4.\pi.n$.

Ces calculs sont effectués par l'unité de calcul 29.

Si maintenant on répète les mêmes mesures pour trois zones 18 de la pièce 19, on peut connaître la position de cette dernière dans l'espace par rapport au plan image du miroir 16.

En répétant les mêmes opérations pour trois zones d'une seconde pièce, on peut naturellement en déduire les positions relatives de la pièce 19 et de cette autre pièce. Connaissant leurs positions relatives, entre elles ou par rapport au plan image précité du miroir 16, on peut respectivement les régler de manière à par exemple disposer leur face frontale dans le même plan, notamment dans le plan image du miroir de référence 16.

Lors de ces réglages, on peut déplacer le miroir de référence 16 de manière à déplacer son image le long de la direction du faisceau de mesure 17 afin d'effectuer un réglage relatif du miroir 16 par rapport à la première pièce installée pour ensuite procéder au réglage de la seconde pièce.

Les moyens d'analyse peuvent avantageusement comprendre un analyseur d'image couplé à une unité de calcul automatique qui peuvent par ailleurs être reliés à des moyens de commande de déplacement du miroir et/ou de la première pièce, et/ou de la deuxième pièce.

Dans une application particulière représentée sur la figure 4, le dispositif décrit peut être utilisé pour le positionnement précis d'une puce 30 insérée dans un orifice 31 d'un substrat 30a. A cet effet, on choisira trois zones réfléchissantes 32 sur la face avant de la puce 30, ces zones formant un triangle, et trois zones réfléchissantes 33 sur la face avant du substrat 30a, ces zones formant également un triangle. Les opérations de positionnement pourront être effectuées de manière à ce que leurs faces avant s'étendent dans un même plan.

Le dispositif optique de mesure de distance de la figure 3 étant plus spécialement conçu pour fonctionner de manière séquentielle, les deux ondes de longueur d'onde $\lambda 1$ et $\lambda 2$ étant analysées, successivement, on va maintenant décrire, en référence aux figures 5 et 6, deux dispositifs optiques de mesure de distance plus spécialement conçu pour fonctionner de manière simultanée.

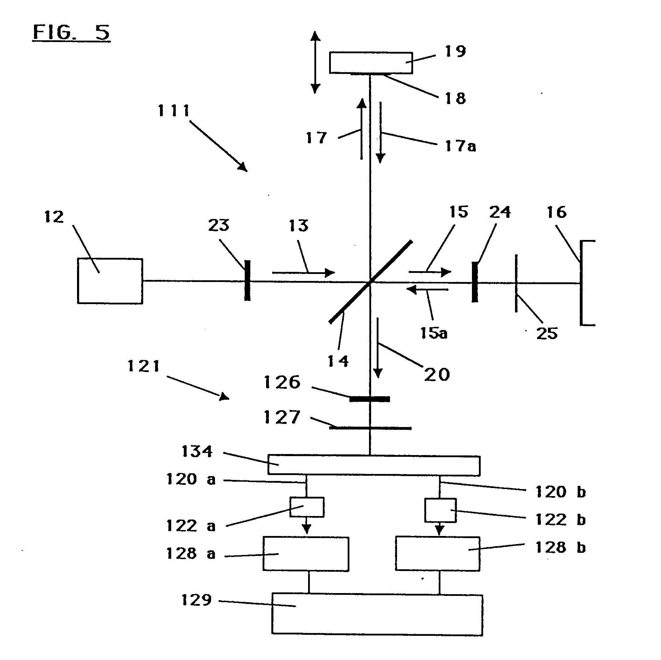

En référence à la figure 5, on voit que le dispositif optique de mesure de distance 111 se différencie du dispositif décrit en référence à la figure 3 par le fait que le sélecteur 22 est supprimé et que ses moyens d'analyse ou ellipsométriques 121 comprennent, sur le faisceau résultant 20 une lame quart d'onde 126 puis un polariseur 127, suivi d'un séparateur 134 du faisceau 20 en deux faisceaux d'analyse 120a et 120b qui sont captés respectivement par des moyens de photodétection 128a et 128b. Sur les faisceaux 120a et 120b sont prévus des filtres 122a et 122b qui sélectionnent respectivement les ondes de longueurs d'onde $\lambda 1$ et $\lambda 2$. Les moyens de photodétection sont reliés à une unité d'analyse d'image et de calcul 129 appliquant les formules précitées. Cette unité 129 peut alors exécuter le calcul précité à partir des deux ondes $\lambda 1$ et $\lambda 2$ reçues simultanément.

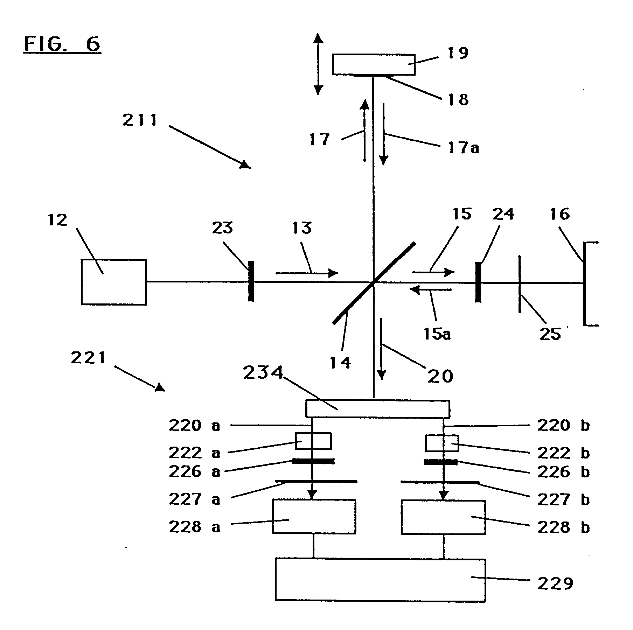

Cette simultanéïté peut être également obtenue par le montage du dispositif 211 de la figure 6 dans lequel les moyens d'analyse ou ellipsométriques 221 comprennent une séparatrice 234 séparant le faisceau résultant 20 en deux faisceaux d'analyse 220a et 220b sur lesquels sont prévus respectivement des lames quart d'onde 226a et 226b, des polariseurs 227a et 227b et des filtres 222a et 222b pour sélectionner les ondes de longueur d'onde $\lambda 1$ et $\lambda 2$, ces faisceaux 220a et 220b étant ensuite captés par des moyens de photodétection 228a et 228b qui sont reliés à une unité d'analyse d'image et de calcul 229. Les moyens d'analyse proposés pourraient comprendre des unités ellipsométriques à mesures plus rapides.

## Revendications

1. Procédé optique de mesure de distance, caractérisé par le fait qu'il consiste :
   - à émettre un faisceau lumineux incident (13) comprenant au moins deux ondes de longueurs d'ondes différentes ($\lambda 1$ et $\lambda 2$),
   - à séparer ce faisceau en un faisceau de référence (15) et un faisceau de mesure (17) qui se réfléchissent sur respectivement un réflecteur de référence (16) et une zone (18) d'une pièce (19) dont on veut mesurer la position dans la direction du faisceau de mesure,
   - à recombiner les faisceaux de référence (15a) et de mesure (17a) réfléchis en un faisceau résultant (20) dans lequel lesdites ondes présentent des états de polarisation dont les composantes tournent lorsque le chemin optique du faisceau précité de mesure varie et qui déterminent dans la direction du faisceau de mesure des plages adjacentes aux extrémités de chacune desquelles les positions angulaires de deux composantes correspondantes de ces états de polarisation sont identiques,
   - à déterminer dans le faisceau résultant les positions angulaires ($\alpha 1$ et $\alpha 2$) de deux composantes correspondantes desdits états de polarisation desdites ondes,
   - et à calculer en fonction desdites positions angulaires, la distance séparant la zone précitée de ladite pièce par rapport à une position de référence.

2. Procédé selon la revendication 1, caractérisé par le fait qu'il consiste à calculer la distance précitée par rapport à l'image du réflecteur de référence, en appliquant le principe des excédents fractionnaires aux entiers k1 et k2 des égalités de chemins optiques par la formule suivante

   $$\alpha 1.\lambda 1 + 2.k1.\pi.\lambda 1 = \alpha 2.\lambda 2 + 2.k2.\pi.\lambda 2 = 4.\pi.n.d$$

   ou la formule corrigée suivante

   $$C1 + \alpha 1.\lambda 1 + 2.k1.\pi.\lambda 1 = C2 + \alpha 2.\lambda 2 + 2.k2.\pi.\lambda 2 = 4.\pi.n.d$$

   dans lesquelles n est l'indice de réfraction du milieu de mesure, C1 et C2 sont les différences de chemins optiques liées à la dispersion chromatique de l'interféromètre aux longeurs d'ondes choisies $\lambda 1$ et $\lambda 2$, et $\alpha 1$ et $\alpha 2$ sont en radians.

3. Procédé selon l'une des revendications 1 et 2, caractérisé par le fait qu'il consiste à émettre les deux ondes simultanément.

4. Procédé selon l'une des revendications 1 et 2, caractérisé par le fait qu'il consiste à émettre les deux ondes successivement.

5. Procédé selon l'une quelconque des revendications précédentes, caractérisé par le fait que le faisceau émis (13) est un faisceau polychromatique, de préférence à spectre de raies étendu, duquel on extrait les deux ondes précitées.

6. Procédé selon la revendication 5, caractérisé par le fait qu'on sélectionne les ondes précitées dans le faisceau incident précité (13).

7. Procédé selon la revendication 5, caractérisé par le fait qu'on sélectionne les ondes précitées dans le faisceau résultant précité (20).

8. Procédé selon l'une quelconque des revendications précédentes, caractérisé par le fait qu'il consiste à polariser le faisceau incident (13).

9. Procédé selon l'une quelconque des revendications précédentes, caractérisé par le fait qu'il consiste à polariser, entre eux, les faisceaux de référence (15) et de mesure (17) orthogonalement.

10. Procédé selon l'une quelconque des revendications précédentes, caractérisé par le fait qu'il consiste à diviser le faisceau résultant en deux faisceaux d'analyse qui comprennent respectivement les ondes de longueurs d'onde $\lambda 1$ et $\lambda 2$.

11. Procédé selon l'une quelconque des revendications précédentes, caractérisé par le fait que les positions angulaires précitées des états de polarisation des ondes précitées sont analysées par un dispositif ellipsométrique.

12. Procédé selon l'une quelconque des revendications précédentes, caractérisé par le fait que les ondes du faisceau résultant (20) sont transformées en ondes polarisés linéaires ou elliptiques très aplaties dont l'orientation varie en fonction du chemin optique du faisceau de mesure (17).

13. Procédé selon l'une quelconque des revendications précédentes, caractérisé par le fait qu'il consiste à utiliser un réflecteur de référence (16) présentant un coefficient de réflection identique ou voisin de celui de la zone précitée (18) de la pièce (19).

14. Procédé selon l'une quelconque des revendications précédentes, caractérisé par le fait qu'il consiste à égaliser ou rapprocher en valeur l'intensité des faisceaux précités (15a, 17a) se recombinant.

15. Procédé selon l'une quelconque des revendications précédentes, caractérisé par le fait qu'il consiste à prérégler ladite pièce par analyse de franges.

16. Procédé selon l'une quelconque des revendications précédentes, caractérisé par le fait qu'il consiste à placer la zone précitée de la pièce dans la plage centrée sur l'image du réflecteur de référence pour laquelle les chemins optiques du faisceau de référence et du faisceau de mesure sont égaux.

17. Dispositif de mesure de distance d'une zone d'une pièce pour la mise en oeuvre du procédé selon l'une quelconque des revendications précédentes, caractérisé par le fait qu'il comprend des moyens (12, 22, 23) pour émettre un faisceau de lumière comprenant deux ondes polarisées, une lame séparatrice (14) placée de telle sorte que la polarisation du faisceau incident est parallèle ou perpendiculaire au plan d'incidence du faisceau sur cette lame, un réflecteur de référence (16) placé sur le chemin du faisceau de référence (15), une lame quart d'onde (24) placée dans le chemin du faisceau de référence ou de celui de mesure pour faire pivoter de 90° le plan de polarisation de ce faisceau, et des moyens (21) pour analyser les positions angulaires des composantes correspondantes des états de polarisation desdites ondes dans le faisceau résultant.

18. Dispositif de mesure selon la revendication 17, caractérisé par le fait que les moyens d'analyse comprennent une lame quart d'onde (26) placée dans le chemin du faisceau résultant pour transformer la polarisation de ce faisceau en une polarisation linéaire ou elliptique très aplatie, et un polariseur (27).

19. Dispositif de mesure selon la revendication 17, caractérisé par le fait que les moyens d'analyse comprennent un dispositif ellipsométrique.

20. Dispositif de mesure selon l'une quelconque des revendications 17 à 19, caractérisé par le fait qu'il comprend des moyens d'analyse ou ellipsométriques qui comprennent des moyens de photodétection desdites ondes et une unité d'analyse d'image et de calcul.

21. Dispositif de mesure selon l'une quelconque des revendications 17 à 20, caractérisé par le fait qu'il comprend des moyens (25) pour égaliser ou rapprocher en valeur l'intensité des faisceaux précités se recombinant.

22. Procédé de positionnement d'une pièce par rapport à une autre pièce qui lui est adjacente, mettant en oeuvre le procédé ou le dispositif selon l'une quelconque des revendications précédentes, caractérisé par le fait qu'il consiste à mesurer la distance de trois zones ou points (32) d'une première pièce (30) par rapport au plan image du réflecteur de référence, à déplacer cette pièce ou le miroir jusqu'à une position de réglage par rapport à ce plan image, à mesurer la distance de trois zones ou points (33) d'une seconde pièce (30a) par rapport au plan image du réflecteur de référence, à déplacer cette pièce jusqu'à une position de réglage par rapport à celle de la première pièce ou le miroir.

23. Procédé de positionnement selon la revendication 22, caractérisé par le fait qu'il consiste à placer les zones (32 et 33) desdites pièces (30 et 30a) dans un même plan situé dans le plan image précité du réflecteur de référence.

24. Procédé de positionnement selon l'une des revendications 22 et 23, caractérisé par le fait qu'il consiste à déplacer le réflecteur de référence au cours du positionnement.

FIG. 1

FIG. 2

FIG. 4

FIG. 3

# FIG. 5

## FIG. 6

Office européen
des brevets

**RAPPORT DE RECHERCHE EUROPEENNE**

Numero de la demande

EP    92 40 3513

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 450 246 (ETAT FRANCAIS) <br> * le document en entier * <br> --- | 1 | G01B9/02 |
| A | FR-A-1 579 550 (N.V. PHILIPS' GLOEILAMPENFABRIEKEN) <br> * le document en entier * <br> --- | 1 | |
| A | FR-A-2 184 829 (VARIAN ASSOCIATES) <br> * le document en entier * <br> --- | 1 | |
| A | FR-A-2 100 419 (N.V. PHILIPS' GLOEILAMPENFABRIEKEN) <br> * revendications; figures * <br><br> ----- | 1 | |
| | | | **DOMAINES TECHNIQUES RECHERCHES (Int. Cl.5 )** |
| | | | G01B |

Le présent rapport a été établi pour toutes les revendications

| Lieu de la recherche | Date d'achèvement de la recherche | Examinateur |
|---|---|---|
| LA HAYE | 01 AVRIL 1993 | BATTESON A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)